(19) Europäisches Patentamt
European Patent Office
Office européen des brevets

(11) **EP 2 551 319 B1**

(12) **EUROPEAN PATENT SPECIFICATION**

(45) Date of publication and mention of the grant of the patent:
**03.05.2017 Bulletin 2017/18**

(21) Application number: **11758990.3**

(22) Date of filing: **18.03.2011**

(51) Int Cl.:
***C09J 133/00*** $^{(2006.01)}$ ***C09J 7/02*** $^{(2006.01)}$
***C09J 133/06*** $^{(2006.01)}$

(86) International application number:
**PCT/JP2011/001617**

(87) International publication number:
**WO 2011/118179 (29.09.2011 Gazette 2011/39)**

(54) **ACRYLIC ADHESIVE COMPOSITION AND ACRYLIC ADHESIVE TAPE**

ACRYLKLEBEZUSAMMENSETZUNG UND ACRYLKLEBEBAND

COMPOSITION ADHÉSIVE ACRYLIQUE ET RUBAN ADHÉSIF ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2010 JP 2010070365**

(43) Date of publication of application:
**30.01.2013 Bulletin 2013/05**

(73) Proprietor: **Nitto Denko Corporation**
**Ibaraki-shi, Osaka 567-8680 (JP)**

(72) Inventors:
- **OKAMOTO, Masayuki**
  **Ibaraki-shi**
  **Osaka 567-8680 (JP)**
- **NIWA, Masahito**
  **Ibaraki-shi**
  **Osaka 567-8680 (JP)**
- **AKIYAMA, Jun**
  **Ibaraki-shi**
  **Osaka 567-8680 (JP)**
- **SHIGETOMI, Kiyoe**
  **Ibaraki-shi**
  **Osaka 567-8680 (JP)**

(74) Representative: **Grünecker Patent- und Rechtsanwälte**
**PartG mbB**
**Leopoldstraße 4**
**80802 München (DE)**

(56) References cited:
**JP-A- 56 086 979** **JP-A- 58 118 872**
**JP-A- 2008 174 648** **JP-A- 2010 184 979**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an acrylic pressure-sensitive adhesive composition and an acrylic pressure-sensitive adhesive tape.

### Background Art

Because acrylic pressure-sensitive adhesive tapes each having an acrylic pressure-sensitive adhesive layer are excellent in light resistance, weatherability, oil resistance, etc., and further excellent in adhesiveness, such as pressure-sensitive adhesive force, resistance to resilience, and holding property (cohesive force), and aging resistance, such as heat resistance and weatherability, the acrylic pressure-sensitive adhesive tapes have been conventionally used in wide applications. In particular, the acrylic pressure-sensitive adhesive tapes having such properties have been widely used as joining materials in various industrial fields, such as home electronic appliances, building materials, and automobile interior and exterior materials. Accordingly, the acrylic pressure-sensitive adhesive tapes are required to be adhered, with high reliability, to various adherends (objects to be joined) including: metallic materials, such as stainless steel and aluminum; various plastic materials, such as polyethylene, polypropylene, polystyrene, ABS, (meth)acrylic resin, and polycarbonate resin; and glass materials.

A method of adding a tackifying resin (tackifier) to an acrylic pressure-sensitive adhesive composition that forms an acrylic pressure-sensitive adhesive layer is known as a method of enhancing the adhesiveness of an acrylic pressure-sensitive adhesive tape to an adherend. Patent Documents 1 and 2 disclose acrylic pressure-sensitive adhesive compositions in each of which rosin or a hydrogenated petroleum resin has been added, as a tackifying resin, to an acrylic polymer.

### Patent Documents

[Patent Document 1] Japanese Patent Application Publication No. 1994-207151

[Patent Document 2] Japanese Patent Application Publication (Translation of PCT Application) No. 1999-504054. Patent Document 3 JP-58118872 discloses a tricyclique acrylate copolymer.

## DISCLOSURE OF THE INVENTION

### Problem to be Solved by the Invention

Acrylic pressure-sensitive adhesive tapes are always required to have improved adhesiveness to adherends. In particular, it is strongly required that acrylic pressure-sensitive adhesive tapes should have improved adhesiveness to adherends having low polarity represented by polyolefin resins, such as polyethylene and polypropylene, which are frequently used for home electric appliances, building materials, and automobile interior and exterior materials, etc. On the other hand, there are sometimes the cases where the aforementioned acrylic pressure-sensitive adhesive composition to which a tackifying resin, such as rosin, has been added does not sufficiently meet the demand that the adhesiveness of an acrylic pressure-sensitive adhesive tape to an adherend having low polarity should be improved.

The present invention has been made in view of these situations, and a purpose of the invention is to provide a technique in which the adhesiveness of an acrylic pressure-sensitive adhesive tape can be improved.

### Means for Solving the Problem

An embodiment according to the present invention is an acrylic pressure-sensitive adhesive composition. The acrylic pressure-sensitive adhesive composition comprises: an acrylic polymer (A); and a (meth)acrylic polymer (B) that includes, as a monomer unit, a (meth) acrylic monomer having a tricyclic or higher alicyclic structure and that has a weight average molecular weight of 1000 or more and less than 30000.

According to the acrylic pressure-sensitive adhesive composition of this embodiment, the adhesiveness of an acrylic pressure-sensitive adhesive tape can be improved.

In the acrylic pressure-sensitive adhesive composition according to the aforementioned embodiment, the (meth) acrylic monomer may be a (meth)acrylic acid ester represented by the following general formula (1):

$$CH_2=C(R^1)COOR^2 \qquad (1)$$

[wherein, $R^1$ is a hydrogen atom or methyl group and $R^2$ is an alicyclic hydrocarbon group having a tricyclic or higher alicyclic structure].

In the acrylic pressure-sensitive adhesive composition according to the aforementioned embodiment, the alicyclic hydrocarbon group may have a bridged ring structure. The content of the (meth) acrylic polymer (B) may be within a range of 2 to 70 parts by weight based on 100 parts by weight of the acrylic polymer (A).

Another embodiment of the present invention is an acrylic pressure-sensitive adhesive tape. The acrylic pressure-sensitive adhesive tape comprises a pressure-sensitive adhesive layer including an acrylic pressure-sensitive adhesive composition according to any one of the aforementioned embodiments.

Advantage of the Invention

According to the present invention, the adhesiveness of an acrylic pressure-sensitive adhesive tape can be improved.

BEST MODE FOR CARRYING OUT THE INVENTION

An acrylic pressure-sensitive adhesive composition according to the present embodiment comprises: an acrylic polymer (A) as a pressure-sensitive adhesive composition; and a (meth) acrylic polymer (B), as a tackifying resin, having a weight average molecular weight of 1000 or more and less than 30000 (hereinafter, appropriately referred to as a (meth) acrylic polymer (B)). Hereinafter, the acrylic polymer (A) and the (meth)acrylic polymer (B) will be described in detail.

[Acrylic Polymer (A)]

The acrylic polymer (A) contains, for example, approximately 50% by weight or more of (meth) acrylic acid alkyl ester having a linear or branched-chain $C_{1-20}$ alkyl group as a monomer unit. The acrylic polymer (A) may have a structure in which the (meth) acrylic acid alkyl ester having a $C_{1-20}$ alkyl group is used alone or in combination of two or more thereof. The acrylic polymer (A) can be obtained by polymerizing (for example, solution polymerization, emulsion polymerization, or UV polymerization) the (meth) acrylic acid alkyl ester along with a polymerization initiator.

The ratio of the (meth)acrylic acid alkyl ester having a $C_{1-20}$ alkyl group is within a range of approximately 50% by weight or more to approximately 99.9% by weight or less, preferably within a range of approximately 60% by weight or more to approximately 95% by weight or less, and more preferably within a range of approximately 70% by weight or more to approximately 85% by weight or less, based on the total weight of the monomer components for preparing the acrylic polymer (A).

Examples of the (meth) acrylic acid alkyl ester having a $C_{1-20}$ alkyl group include, for example: (meth) acrylic acid $C_{1-20}$ alkyl esters, such as (meth)acrylic acid methyl, (meth)acrylic acid ethyl, (meth)acrylic acid propyl, (meth)acrylic acid isopropyl, (meth) acrylic acid butyl, (meth) acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl (2-ethylhexyl(meth)acrylate), (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl [ preferably (meth) acrylic acid $C_{2-14}$ alkyl esters, and more preferably (meth) acrylic acid $C_{2-10}$ alkyl esters], etc. Herein, the "(meth)acrylic acid alkyl ester" means an acrylic acid alkyl ester and/or a methacrylic acid alkyl ester, and all of the "(meth)..." expressions have the same meaning.

Examples of the (meth)acrylic acid ester other than the (meth)acrylic acid alkyl ester include, for example:

(meth)acrylic acid esters having an alicyclic hydrocarbon group, such as cyclopentyl(meth)acrylate, cyclohexyl(meth)acrylate, and isobornyl (meth) acrylate; (meth) acrylic acid esters having an aromatic hydrocarbon group, such as phenyl(meth)acrylate; and
(meth) acrylic acid esters obtained from an alcohol derived from a terpene compound, etc.

For the purpose of modifying cohesive force, heat resistance, and cross-linking property, etc., the acrylic polymer (A) may contain, if necessary, another monomer component (copolymerizable monomer) that is copolymerizable with the (meth)acrylic acid alkyl ester. Accordingly, the acrylic polymer (A) may contain a copolymerizable monomer along with the (meth) acrylic acid alkyl ester as a major component. A monomer having a polar group can be preferably used

as the copolymerizable monomer.

Specific examples of the copolymerizable monomer include: carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl) methyl methacrylate; acid anhydride group-containing monomers, such as maleic acid anhydride and itaconic acid anhydride; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalene sulfonic acid; phosphate group-containing monomers, such as 2-hydroxyethyl acryloyl phosphate; (N-substituted)amide monomers, such as (meth)acrylamide, ,N-dialkyl(meth)acrylamides including N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide, N-ethyl(meth)acrylamide, N-isopropyl(meth)acrylamide, N-butyl(meth)acrylamide, N-n-butyl(meth)acrylamide, N-methylol(meth)acrylamide, N-ethylol(meth)acrylamide, N-methylolpropane(meth)acrylamide, N-methoxymethyl(meth)acrylamide, N-methoxyethyl(meth)acrylaimde, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; vinyl esters, such as vinyl acetate and vinyl propionate; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl-2-piperidone, N-vinyl-3-morpholinone, N-vinyl-2-caprolactam, N-vinyl-1,3-oxazine-2-one, N-vinyl-3,5-morpholinedione, N-vinyl pyrazole, N-vinyl isoxazole, N-vinyl thiazole, N-vinyl isothiazole, N-vinyl pyridazine; N-vinyl carboxylic acid amides; lactam monomers, such as N-vinyl caprolactam; cyanoacrylate monomers, such as acrylonitrile and methacrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; (meth)acrylic acid alkoxy alkyl monomers, such as (meth)acrylic acid methoxyethyl and (meth)acrylic acid ethoxyethyl; styrene monomers, such as styrene and $\alpha$-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxy ethylene glycol, and (meth)acrylic acid methoxy polypropylene glycol; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; vinyl esters, such as vinyl acetate and vinyl propionate; aromatic vinyl compounds such as vinyl toluene and styrene; olefins or dienes, such as ethylene, butadiene, isoprene, and isobutylene; vinyl ethers, such as vinyl alkyl ether; vinyl chloride; (meth)acrylic acid alkoxy alkyl monomers, such as (meth)acrylic acid methoxyethyl and (meth)acrylic acid ethoxyethyl; sulfonic acid group-containing monomers, such as vinyl sulfonate sodium; imide group-containing monomers, such as cyclohexyl maleimide and isopropyl maleimide; isocyanate group-containing monomers, such as 2-isocyanate ethyl(meth)acrylate; and acryloyl morpholine. These copolymerizable monomers can be used alone or in combination of two or more thereof.

When the acrylic polymer (A) contains a copolymerizable monomer along with the (meth)acrylic acid alkyl ester as a major component, carboxyl group-containing monomers can be preferably used. Among them, an acrylic acid can be preferably used. The use amount of the copolymerizable monomer is not particularly limited, but the copolymerizable monomer can be usually contained in an amount within a range of approximately 0.1 to approximately 40% by weight, preferably within a range of approximately 0.5 to approximately 30% by weight, and more preferably within a range of approximately 1 to approximately 20% by weight, based on the total weight of the monomer components for preparing the acrylic polymer (A).

By containing the copolymerizable monomer in an amount of approximately 0.1% by weight or more, a decrease in the cohesive force of the acrylic pressure-sensitive adhesive tape or sheet having a pressure-sensitive adhesive layer formed of the acrylic pressure-sensitive adhesive composition can be prevented and high shear force can be obtained. Further, by containing the copolymerizable monomer in an amount of approximately 40% by weight or less, it can be prevented that the cohesive force may become too high and the tackiness at normal temperature (25°C) can be improved.

A polyfunctional monomer may be contained, if necessary, in the acrylic polymer (A) in order to adjust the cohesive force of the acrylic pressure-sensitive adhesive composition to be formed.

Examples of the polyfunctional monomer include, for example: (poly)ethylene glycol di(meth)acrylate, (poly)propylene glycol di(meth)acrylate, neopentyl glycol di(meth)acrylate, pentaerythritol di(meth)acrylate, pentaerythritol

tri(meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc. Among them, trimethylolpropane tri(meth)acrylate, hexanediol di(meth)acrylate, and dipentaerythritol hexa(meth)acrylate can be preferably used. The polyfunctional (meth)acrylates can be used alone or in combination of two or more thereof.

The use amount of the polyfunctional monomer is changed depending on the molecular weight or the number of functional groups thereof, but the polyfunctional monomer is added in an amount within a range of approximately 0.01 to approximately 3.0% by weight, preferably within a range of approximately 0.02 to approximately 2.0% by weight, and more preferably within a range of approximately 0.03 to approximately 1.0% by weight, based on the total weight of the monomer components for preparing the acrylic polymer (A).

If the use amount of the polyfunctional monomer is more than approximately 3.0% by weight based on the total weight of the monomer components for preparing the acrylic polymer (A), for example, the cohesive force of the acrylic pressure-sensitive adhesive composition may become too high and accordingly there are sometimes the cases where the adhesive force is decreased. On the other hand, if the use amount thereof is less than approximately 0.01% by weight, for example, there are sometimes the cases where the cohesive force of the acrylic pressure-sensitive adhesive composition is decreased.

<Polymerization Initiator>

In preparing the acrylic polymer (A), the acrylic polymer (A) can be easily formed by a curing reaction using heat or ultraviolet rays with the use of a polymerization initiator, such as thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators (for example, 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.); peroxide polymerization initiators (for example, dibenzoyl peroxide, t-butyl permaleate, and lauroyl peroxide, etc.); and redox polymerization initiators, etc.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, $\alpha$-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [product name: IRGACURE 651, made by Ciba Speciality Chemicals Inc.], and anisole methyl ether, etc. Specific examples of the acetophenone photo-polymerization initiator include, for example: 1-hydroxycyclohexyl phenyl ketone [product name: IRGACURE 184, made by Ciba Speciality Chemicals Inc.], 4-phenoxy dichloroacetophenone, 4-t-butyl-dichloroacetophenone, 1-[4-(2-hydroxyethoxy)-phenyl]-2-hydroxy-2-methyl-1-propane-1 -one [product name: IRGACURE 2959, made by Ciba Speciality Chemicals Inc.], 2-hydroxy-2-methyl-1-phenyl-propane-1-one [product name: DAROCUR 1173, made by Ciba Speciality Chemicals Inc.], and methoxy acetophenone, etc. Specific examples of the $\alpha$-ketol photo-polymerization initiator include, for example: 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and $\alpha$-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone,

2,4-dimethylthioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photo-polymerization initiator include, for example:

bis(2,6-dimethoxybenzoyl)phenylphosphine oxide, bis(2,6-dimethoxybenzoyl)(2,4,4-trimethylpentyl) phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl) phosphine oxide, bis(2,4-dimethoxybenzoyl)(2-methypropane-1-yl) phosphine oxide, bis(2,4,6-trimethylbenzoyl)(2,4-dipentoxyphenyl) phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

The use amount of the photo-polymerization initiator is not particularly limited, but the photo-polymerization initiator is combined in an amount within a range of, for example, approximately 0.01 to approximately 5 parts by weight, and preferably within a range of approximately 0.05 to approximately 3 parts by weight, based on 100 parts by weight of the monomer components for preparing the acrylic polymer (A).

If the use amount of the photo-polymerization initiator is less than approximately 0.01 parts by weight, there are sometimes the cases where a polymerization reaction becomes insufficient. If the use amount thereof is more than approximately 5 parts by weight, there are sometimes the cases where an ultraviolet ray does not reach the inside of the pressure-sensitive adhesive layer, because the photo-polymerization initiator absorbs an ultraviolet ray. In this case, a decrease in the rate of polymerization is caused, or the molecular weight of the generated polymer becomes small. Thereby, the cohesive force of the formed pressure-sensitive adhesive layer becomes small, and hence there are sometimes the cases where, when the pressure-sensitive adhesive layer is peeled off from a film, part of the pressure-sensitive adhesive layer remains on the film and accordingly the film cannot be reused. The photo-polymerization initiators may be used alone or in combination of two or more thereof.

Besides the aforementioned polyfunctional monomers, a cross-linking agent can also be used for adjusting the cohesive force. Commonly-used cross-linking agents can be used as the cross-linking agent. Examples of the cross-linking agents include, for example: epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. In particular, the isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer (A) can also be prepared as a partial polymer (acrylic polymer syrup) that can be obtained by radiating ultraviolet (UV) rays onto a mixture in which the aforementioned monomer components and the polymerization initiator have been combined, so that the monomer components are partially polymerized. An acrylic pressure-sensitive adhesive composition is prepared by combining the later-described (meth)acrylic polymer (B) into the acrylic polymer syrup, and then polymerization can also be completed by coating the pressure-sensitive adhesive composition on a predetermined object to be coated and by radiating UV rays. The weight average molecular weight (Mw) of the acrylic polymer (A) is within a range of, for example, 30000 to 5000000.

[(Meth)Acrylic Polymer (B)]

The (meth) acrylic polymer (B) is a polymer having a weight average molecular weight smaller than that of the acrylic polymer (A), and functions as a tackifying resin and has the advantage that inhibition of polymerization is hardly caused when UV polymerization is performed. The (meth)acrylic polymer (B) is a (meth)acrylic polymer that includes, as a monomer unit, a (meth)acrylic monomer having a tricyclic or higher alicyclic structure and that has a weight average molecular weight of 1000 or more and less than 30000. By providing a bulky structure, such as a tricyclic or higher alicyclic structure, to the (meth) acrylic polymer (B), the adhesiveness of the acrylic pressure-sensitive adhesive composition to an adherend having low polarity, formed of polyethylene or polypropylene, etc., can be remarkably improved.

The (meth)acrylic monomer that forms the (meth)acrylic polymer (B) is, for example, a (meth)acrylic acid ester represented by the following general formula (1):

$$CH_2{=}C(R^1)COOR^2 \qquad (1)$$

[wherein, $R^1$ is a hydrogen atom or methyl group and $R^2$ is an alicyclic hydrocarbon group having a tricyclic or higher alicyclic structure].

It is preferable that the alicyclic hydrocarbon group has a three-dimensional structure, such as a bridged ring structure. By providing a tricyclic or higher alicyclic structure containing a bridged ring structure to the (meth)acrylic polymer (B), as stated above, the adhesiveness of the acrylic pressure-sensitive adhesive composition (acrylic pressure-sensitive adhesive tape) can be further improved. In particular, the pressure-sensitive adhesive force to an adherend having low polarity, such as polypropylene, can be improved more remarkably. Further, resistance to resilience and a holding property can be both achieved. That is, by providing a tricyclic or higher alicyclic structure containing a bridged ring structure to the (meth) acrylic polymer (B), an acrylic pressure-sensitive adhesive composition (acrylic pressure-sensitive adhesive tape) can be obtained, in which pressure-sensitive adhesive force, resistance to resilience, and a holding property are combined at a high level. It is assumed that such properties are obtained because the cohesive force of the unbridged components in the acrylic pressure-sensitive adhesive composition (acrylic pressure-sensitive adhesive tape) is enhanced by containing a bulky structure, such as a tricyclic or higher alicyclic structure having a bridged ring structure. Examples of the alicyclic hydrocarbon group having a bridged ring structure include, for example, a dicyclopentanyl group represented by the following formula (2a), a dicyclopentenyl group represented by the following formula (2b), an adamantyl group represented by the following formula (2c), a tricyclopentanyl group represented by the following formula (2d), and a tricyclopentenyl group represented by the following formula (2e), etc. Among the (meth) acrylic monomers having a tricyclic or higher alicyclic structure containing a bridged ring structure, (meth)acrylic monomers having a saturated structure, such as the dicyclopentanyl group represented by the following formula (2a), the adamantyl group represented by the following formula (2c), and the tricyclopentanyl group represented by the following formula (2d), can be particularly and preferably used as a monomer that forms the (meth)acrylic polymer (B), in terms of hardly causing inhibition of polymerization, when UV polymerization is adopted for the synthesis of the (meth)acrylic polymer (B).

[Formula 1]

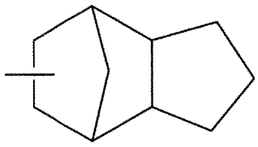

(2a)

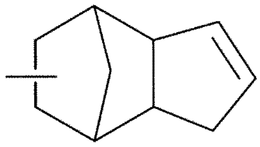

(2b)

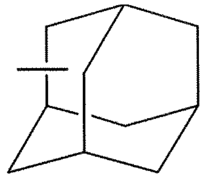

(2c)

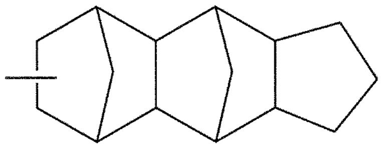

(2d)

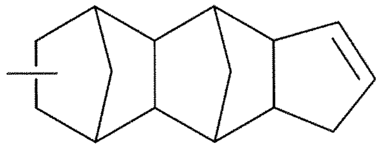

(2e)

Examples of the (meth)acrylic monomer having such a tricyclic or higher alicyclic structure containing a bridged ring structure include (meth)acrylic acid esters, such as dicyclopentanyl methacrylate, dicyclopentanyl acrylate, dicyclopentanyl oxyethyl methacrylate, dicyclopentanyl oxyethyl acrylate, tricyclopentanyl methacrylate, tricyclopentanyl acrylate, 1-adamantyl methacrylate, 1-adamantyl acrylate, 2-methyl-2-adamantyl methacrylate, 2-methyl-2-adamantyl acrylate, 2-ethyl-2-adamantyl methacrylate, and 2-ethyl-2-adamantyl acrylate. These (meth) acrylic monomers can be used alone or in combination.

The (meth)acrylic polymer (B) may also contain, if necessary, another monomer component (copolymerizable monomer) that is copolymerizable with the aforementioned (meth)acrylic monomer. That is, the (meth) acrylic polymer (B) may also contain a copolymerizable monomer along with the (meth)acrylic monomer having a tricyclic or higher alicyclic structure that is a major component.

Examples of the copolymerizable monomer include (meth) acrylic acid esters, such as: (meth) acrylic acid alkyl esters including (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid-2-ethylhexyl, (meth)acrylic acid heptyl, (meth)acrylic acid octyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, and (meth)acrylic acid dodecyl; esters of (meth)acrylic acids with alicyclic alcohols including (meth)acrylic acid cyclohexyl and (meth)acrylic acid isobornyl; (meth)acrylic acid aryl esters including (meth)acrylic acid phenyl and (meth)acrylic acid benzyl; and (meth) acrylic acid esters obtained from alcohols derived from terpene compounds. These (meth)acrylic acid esters can be used alone or in combination of two or more thereof.

Examples of the another copolymerizable monomer include: (meth)acrylic acid alkoxyalkyl monomers, such as (meth)acrylic acid methoxyethyl, (meth)acrylic acid ethoxyethyl, (meth)acrylic acid propoxyethyl, (meth)acrylic acid butoxyethyl, and (meth) acrylic acid ethoxypropyl; salts, such as (meth) acrylic acid alkali metal salt; di(meth)acrylic acid ester monomers of (poly)alkylene glycols, such as di(meth)acrylic acid ester of ethylene glycol, di (meth) acrylic acid ester of diethylene glycol, di(meth)acrylic acid ester of triethylene glycol, di(meth)acrylic acid ester of polyethylene glycol, di (meth) acrylic acid ester of propylene glycol, di (meth) acrylic acid ester of dipropylene glycol, and di (meth) acrylic acid ester of tripropylene glycol; poly(meth)acrylic acid ester monomers, such as trimethylolpropane tri(meth)acrylic acid ester; vinyl esters, such as vinyl acetate and vinyl propionate; halogenated vinyl compounds, such as vinylidene chloride, (meth)acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline;

aziridine group-containing polymerizable compounds, such as (meth)acryloylaziridine and (meth)acrylic acid-2-aziridinylethyl; epoxy group-containing vinyl monomers, such as allyl glycidyl ether, (meth)acrylic acid glycidyl ether and (meth)acrylic acid-2-ethyl glycidyl ether; hydroxyl group-containing vinyl monomers, such as (meth)acrylic acid-2-hydroxyethyl, (meth)acrylic acid-2-hydroxypropyl, monoesters of (meth)acrylic acids with polypropylene glycol or polyethylene glycol, and adducts of lactones with (meth)acrylic acid-2-hydroxyethyl; fluorine-containing vinyl monomers, such as fluorine-substituted (meth)acrylic acid alkyl ester; carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalene sulfonic acid; phosphate group-containing monomers, such as 2-hydroxyethyl acryloyl phosphate; acid anhydride group-containing monomers, such as maleic acid anhydride and itaconic acid anhydride; reactive halogen-containing vinyl monomers, such as 2-chloroethyl vinyl ether and monochloro vinyl acetate; aromatic vinyl compound monomers, such as styrene, $\alpha$-methylstyrene, and vinyl toluene; amide group-containing vinyl monomers, such as (meth)acrylamide, N-isopropyl(meth)acrylamide, N-butyl(meth)acrylamide, N,N-diethyl(meth)acrylamide, N,N-dimethyl(meth)acrylamide, N-methylol(meth)acrylamide, N-ethylol(meth)acrylamide, N-methylolpropane(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl pyrazole, N-vinyl isoxazole, N-vinyl thiazole, N-vinyl isothiazole, N-vinyl pyridazine; N-vinyl carboxylic acid amides; lactam monomers, such as N-vinyl caprolactam; cyanoacrylate monomers, such as (meth)acrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; imide group-containing monomers, such as cyclohexyl maleimide and isopropyl maleimide; isocyanate group-containing monomers, such as 2-isocyanate ethyl(meth)acrylate; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl)methyl methacrylate; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; olefins or dienes, such as ethylene, butadiene, isoprene, and isobutylene; vinyl ethers, such as vinyl alkyl ether; vinyl chloride; organic silicon-containing vinyl monomers, such as vinyltrimethoxysilane, $\gamma$-methacryloxpropyl trimethoxy silane, allyltrimethoxysilane, trimethoxysilylpropylallylamine, and 2-methoxy ethoxy trimethoxy silane; and macro-monomers having a radically polymerizable vinyl group at the monomer end to which a vinyl group has been polymerized. These monomers can be polymerized, alone or in combination thereof, with the aforementioned (meth) acrylic monomers.

A functional group reactive with an epoxy group or an isocyanate group may be further introduced into the (meth)acrylic polymer (B). Examples of such a functional group include a hydroxyl group, carboxyl group, amino group, amide group, and a mercapto group. When the (meth)acrylic polymer (B) is produced, it is preferable to use (copolymerize) a monomer having such a functional group.

The weight average molecular weight of the (meth)acrylic polymer (B) is 1000 or more and less than 30000, preferably 1500 or more and less than 20000, and more preferably 2000 or more and less than 10000. If the molecular weight is 30000 or more, there are sometimes the cases where the effect of improving the pressure-sensitive adhesive force of the pressure-sensitive adhesive tape cannot be sufficiently obtained. Conversely, if the molecular weight is less than 1000, there are sometimes the cases where, because the molecular weight is too small, the pressure-sensitive adhesive force or holding property of the pressure-sensitive adhesive tape is decreased.

The weight average molecular weight can be determined by a GPC method in terms of polystyrene. Specifically, the weight average molecular weight can be measured by using HPLC8020 and two TSKgel GMH-Hs(20) as columns, which are made by Tosoh Corporation, and under conditions in which a tetrahydrofuran solvent is used and a flow rate is approximately 0.5 ml/min.

The content of the (meth)acrylic polymer (B) is preferably within a range of 2 to 70 parts by weight, and more preferably within a range of 5 to 50 parts by weight, based on 100 parts by weight of the acrylic polymer (A). If the (meth) acrylic polymer (B) is added in an amount more than 70 parts by weight, the elastic modulus of a pressure-sensitive adhesive layer formed of the acrylic pressure-sensitive adhesive composition according to the present embodiment becomes large, and hence there are sometimes the cases where the adhesiveness at a low-temperature is deteriorated or the pressure-sensitive adhesive force is not exerted even at room temperature. Conversely, if the addition amount thereof is smaller than 2 parts by weight, there are sometimes the cases where the effect of adding the (meth)acrylic polymer (B) cannot be obtained.

The glass transition temperature (Tg) of the (meth) acrylic polymer (B) is within a range of approximately 20°C or higher and 300°C or lower, preferably within a range of approximately 30°C or higher and 300°C or lower, and more preferably within a range of approximately 40°C or higher and 300°C or lower. If the glass transition temperature (Tg) is lower than approximately 20°C, the cohesive force of the pressure-sensitive adhesive layer, at a temperature higher

than or equal to room temperature, is decreased, and hence there are sometimes the cases where the holding property or the adhesiveness at a high-temperature is decreased. The glass transition temperatures of typical materials that can be used as monomer components of the (meth)acrylic polymer (B) in the present embodiment are shown in Table 1. The glass transition temperatures shown there are nominal values described in documents or catalogs, etc., or values calculated based on the following Equation (3) (Fox Equation):

$$1/Tg = W1/Tg1 + W2/Tg2 + *** + Wn/Tgn \qquad (3)$$

[wherein, Tg represents the glass transition temperature of the (meth)acrylic polymer (B) (unit: K), Tgi (i= 1, 2, ***, n) represents the glass transition temperature of a homopolymer that has been formed of a monomer i (unit: K), and Wi (i= 1, 2, ***, n) represents the weight fraction of the monomer i in the whole monomer components]. The above Equation (3) is adopted when the (meth)acrylic polymer (B) is formed of n types of monomer components of monomer 1, monomer 2, ***, monomer n.

[Table 1]

| COMPOSITION OF (METH)ACRYLIC POLYMER[B] | Tg(°C) | REMARKS |
|---|---|---|
| DCPMA | 175 | VALUE DESCRIBED IN DOCUMENTS, ETC. |
| DCPA | 120 | VALUE DESCRIBED IN DOCUMENTS, ETC. |
| IBXMA | 173 | VALUE DESCRIBED IN DOCUMENTS, ETC. |
| IBXA | 97 | VALUE DESCRIBED IN DOCUMENTS, ETC. |
| CHMA | 66 | VALUE DESCRIBED IN DOCUMENTS. ETC. |
| MMA | 105 | VALUE DESCRIBED IN DOCUMENTS, ETC. |
| ADMA | 250 | VALUE DESCRIBED IN DOCUMENTS, ETC. |
| ADA | 153 | VALUE DESCRIBED IN DOCUMENTS, ETC. |
| DCPMA/IBXMA40 | 174 | CALCULATED VALUE (BASED ON Fox EQUATION) |
| DCPMA/MMA40 | 144 | CALCULATED VALUE (BASED ON Fox EQUATION) |
| DCPMA/MMA60 | 130 | CALCULATED VALUE (BASED ON Fox EQUATION) |
| IBXMA/MMA60 | 130 | CALCULATED VALUE (BASED ON Fox EQUATION) |
| ADMA/MMA40 | 180 | CALCULATED VALUE (BASED ON Fox EQUATION) |
| ADA/MMA40 | 132 | CALCULATED VALUE (BASED ON Fox EQUATION) |

The abbreviations in Table 1 represent the following compounds.

DCPMA: Dicyclopentanyl Methacrylate
DCPA: Dicyclopentanyl Acrylate
IBXMA: Isobornyl Methacrylate
IBXA: Isobornyl Acrylate
CHMA: Cyclohexyl Methacrylate
MMA: Methyl Methacrylate
ADMA: 1-Adamantyl Methacrylate
ADA: 1-Adamantyl Acrylate
DCPMA/IBXMA 40: Copolymer of DCPMA 60 Parts by Weight and

IBXMA 40 Parts by Weight
DCPMA/MMA 40: Copolymer of DCPMA 60 Parts by Weight and MMA 40 Parts by Weight
DCPMA/MMA 60: Copolymer of DCPMA 40 Parts by Weight and MMA 60 Parts by Weight
IBXMA/MMA 60: Copolymer of IBXMA 40 Parts by Weight and MMA 60 Parts by Weight
ADMA/MMA 40: Copolymer of ADMA 60 Parts by Weight and MMA 40 Parts by Weight
ADA/MMA 40: Copolymer of ADA 60 Parts by Weight and MMA 40 Parts by Weight

(Method of Producing (Meth)Acrylic Polymer (B))

The (meth) acrylic polymer (B) can be produced by subjecting (meth) acrylic monomers each having, for example, the aforementioned structure to polymerization with the use of a solution polymerization method, bulk polymerization method, emulsion polymerization method, suspension polymerization, and block polymerization, etc.

(Method of Adjusting Molecular Weight of (Meth)Acrylic Polymer (B))

In order to adjust the molecular weight of the (meth) acrylic polymer (B), a chain transfer agent can be used while the polymer (B) is being polymerized. Examples of the chain transfer agent to be used include: compounds having a mercapt group, such as octylmercaptan, dodecyl mercaptan, t-dodecyl mercaptan, and mercaptoethanol; thioglycolic acid, ethyl thioglycolate, propyl thioglycolate, butyl thioglycolate, t-butyl thioglycolate, 2-ethylhexyl thioglycolate, octyl thioglycolate, decyl thioglycolate, dodecyl thioglycolate, thioglycolic acid ester of ethylene glycol, thioglycolic acid ester of neopentyl glycol, and thioglycolic acid ester of pentaerythritol.

The use amount of the chain transfer agent is not particularly limited, but the chain transfer agent is usually contained in an amount of approximately 0.1 to approximately 20 parts by weight, preferably in an amount of approximately 0.2 to approximately 15 parts by weight, and more preferably in an amount of approximately 0.3 to approximately 10 parts by weight, based on 100 parts by weight of the (meth) acrylic monomer. By adjusting the addition amount of the chain transfer agent in such a way, a (meth)acrylic polymer (B) having a preferred molecular weight can be obtained. The chain transfer agent can be used alone or in combination of two or more thereof.

The acrylic pressure-sensitive adhesive composition according to the present embodiment contains the aforementioned acrylic polymer (A) and (meth) acrylic polymer (B) as essential components, and can contain, as optional components, various additives that are generally used in the field of pressure-sensitive adhesive compositions. A plasticizer, softener, filler, colorant (pigment, dye, or the like), antioxidant, leveling agent, stabilizer, and antiseptic, etc., are exemplified as such optional components. Such additives that are conventionally and publicly known can be used by ordinary methods.

Subsequently, the structure of an acrylic pressure-sensitive adhesive tape (or acrylic pressure-sensitive adhesive sheet) having a pressure-sensitive adhesive layer containing an acrylic pressure-sensitive adhesive composition with the aforementioned composition, will be described.

The acrylic pressure-sensitive adhesive tape according to the present embodiment comprises a pressure-sensitive adhesive layer containing an acrylic pressure-sensitive adhesive composition. The acrylic pressure-sensitive adhesive tape may be a so-called pressure-sensitive adhesive tape comprising a substrate, in which such a pressure-sensitive adhesive layer is provided on one or both surfaces of a sheet-shaped substrate (supporting body) in a fixed manner, i.e., without an intention of separating the pressure-sensitive adhesive layer from the substrate; or may be a so-called substrate-less pressure-sensitive adhesive tape in which the pressure-sensitive adhesive layer is provided on a substrate having a release property, such as a release liner (release paper, resin sheet whose surface has been subjected to a release treatment, or the like), so that the substrate for supporting the pressure-sensitive adhesive layer is removed when the tape is attached. The concept of the pressure-sensitive adhesive tape described herein can involve objects referred to as a pressure-sensitive adhesive sheet, pressure-sensitive adhesive label, and pressure-sensitive adhesive film, etc. The pressure-sensitive adhesive layer should not be limited to one continuously formed, but may be one formed into a regular pattern, such as, for example, a dot shape and a stripe shape, or formed into a random pattern.

The aforementioned substrate can be formed of a material appropriately selected, in accordance with the application of the pressure-sensitive adhesive tape, from the group consisting of, for example: plastic films, such as a polypropylene film, ethylene-propylene copolymer film, polyester film, and polyvinylchloride film; foam substrates, such as a polyurethane foam and polyethylene foam; paper, such as craft paper, crepe paper, and Japanese paper; cloth, such as cotton cloth and staple fiber cloth; nonwoven cloth, such as polyester nonwoven fabric and vinylon nonwoven fabric; metallic foils, such as aluminum foil and copper foil; and the like. As the aforementioned plastic films, both of a non-oriented film and an oriented (uniaxially oriented or biaxially oriented) film can be used. The surface of the substrate on which the pressure-sensitive adhesive layer is to be provided may be coated with a primer or be subject to a surface treatment, such as a corona discharge treatment. The thickness of the substrate can be appropriately selected in accordance with the purpose, but is generally within a range of approximately 10 μm to 500 μm (typically within a range

of 10 μm to 200 μm).

The pressure-sensitive adhesive layer can be a layer in which the acrylic pressure-sensitive adhesive composition has been cured. That is, the pressure-sensitive adhesive layer can be formed by providing the acrylic pressure-sensitive adhesive composition to an appropriate substrate (e.g., coating) and then by appropriately subjecting the composition to a curing treatment. When two or more types of curing treatments (drying, cross-link formation, polymerization, etc.) are performed, these treatments can be performed simultaneously or in multiple stages. In the case of the pressure-sensitive adhesive composition in which a partial polymer (acrylic polymer syrup) has been used, a final copolymerization reaction is typically performed as the curing treatment (the partial polymer is subjected to a further copolymerization reaction to form a complete polymer). For example, in the case of a photo-curing pressure-sensitive adhesive composition, light radiation is performed. A curing treatment, such as cross-link formation, drying, or the like, may be performed, if necessary. For example, when a photo-curing pressure-sensitive adhesive composition is needed to be dried, light radiation may be performed after the drying of the composition. In the case of the pressure-sensitive adhesive composition in which a complete polymer has been used, a treatment, such as drying (drying by heating), cross-link formation, or the like, is typically performed as the curing treatment, if necessary.

Coating of the acrylic pressure-sensitive adhesive composition can be performed by using a commonly-used coater, such as, for example, a gravure roll coater, reverse roll coater, kiss roll coater, dip roll coater, bar coater, knife coater, spray coater, or the like. In the case of the pressure-sensitive adhesive tape comprising a substrate, a pressure-sensitive adhesive layer may be formed by directly providing a pressure-sensitive adhesive composition to the substrate, or a pressure-sensitive adhesive layer formed on a release liner may be transferred to the substrate.

The thickness of the pressure-sensitive adhesive layer is not particularly limited, but is usually larger than or equal to approximately 10 μm, preferably larger than or equal to approximately 20 μm, and more preferably larger than or equal to approximately 30 μm. Thereby, sufficient adhesiveness can be achieved. The thickness of the pressure-sensitive adhesive layer is appropriately set to be, for example, within a range of approximately 10 to 250 μm.

The acrylic pressure-sensitive adhesive tape according to the present embodiment can be preferably used in the application in which members made of both various resins including, for example, PP (polypropylene), ABS (acrylonitrile-butadiene-styrene copolymer), SBS (styrene-butadiene-styrene block copolymer), PC (polycarbonate), PVC (vinyl chloride), and an acrylic resin, such as PMMA (polymethyl methacrylate), and metals, such as SUS and aluminum, are joined (fixed) to the surfaces of automobiles (coatings of the bodies), house and building materials, and home electronic appliances, etc.

Further, the acrylic pressure-sensitive adhesive tape according to the present embodiment can be preferably used in the application in which various optical members are attached to, for example, liquid crystal cells, optical polyester films, and touch panel members, etc. Accordingly, the technique described herein includes a laminated body in which the pressure-sensitive adhesive layer including the acrylic pressure-sensitive adhesive composition is provided in the optical member. This laminated body typically has an aspect in which the pressure-sensitive adhesive layer on the optical member is protected by a release liner. The optical member in which such a pressure-sensitive adhesive layer is provided can be easily attached to the surface, etc. , of a plastic cover lens panel, glass, or liquid crystal cell. The optical member is not particularly limited, but can be a polarizing film, phase difference film, transparent conductive film (ITO film), etc. Such an optical member may have a single-layer structure made of the same material, or may have a multiple-layer structure made of a plurality of materials. As a method of forming the pressure-sensitive adhesive layer on the optical member, a method of directly providing the pressure-sensitive adhesive layer thereto or a method of transferring the pressure-sensitive adhesive layer thereto can be appropriately adopted, in the same way as in the case where the pressure-sensitive adhesive layer is formed on a substrate. Typically, the pressure-sensitive adhesive layer formed on a release liner is transferred to the base surface of the optical member.

As described above, the acrylic pressure-sensitive adhesive composition according to the present embodiment comprises the (meth) acrylic polymer (B) that includes, as a monomer unit, a (meth) acrylic monomer having a tricyclic or higher alicyclic structure and that has a weight average molecular weight of 1000 or more and less than 30000. Accordingly, when a pressure-sensitive adhesive layer is formed by using the acrylic pressure-sensitive adhesive composition, the adhesiveness of the acrylic pressure-sensitive adhesive tape can be improved. Examples

Hereinafter, the present invention will be described in detail based on Examples, but the invention should not be limited at all by these Examples.

Components of the acrylic pressure-sensitive adhesive compositions according to Examples 1 to 6 and Comparative Examples 1 to 5 are shown in Table 2.

[Table 2]

| | ACRYLIC POLYMER (A) | (METH)ACRYLIC POLYMER (B) | | |
|---|---|---|---|---|
| | COMPOSITION RATIO (100 PARTS BY WEIGHT) | TYPE | NUMBER OF ADDED PARTS (BASED ON 100 PARTS BY WEIGHT OF ACRYLIC POLYMER (A)) | CHAIN TRANSFER AGENT |
| EXAMPLE 1 | 2EHA/NVP=86/14 | DCPMA | 20 PARTS BY WEIGHT | GSH ACID |
| EXAMPLE 2 | 2EHA/NVP=86/14 | DCPMA | 20 PARTS BY WEIGHT | GSH |
| EXAMPLE 3 | 2EHA/AA=94/6 | DCPMA LOW | 20 PARTS BY WEIGHT | GSH ACID |
| EXAMPLE 4 | 2EHA/NVP=86/14 | ADMA | 10 PARTS BY WEIGHT | GSH ACID |
| EXAMPLE 5 | 2EHA/NVP=86/14 | ADMA | 20 PARTS BY WEIGHT | GSH ACID |
| EXAMPLE 6 | 2EHA/NVP=86/14 | ADMA/MMA40 | 20 PARTS BY WEIGHT | GSH ACID |
| COMPARATIVE EXAMPLE 1 | 2EHA/NVP=86/14 | - | - | - |
| COMPARATIVE EXAMPLE 2 | 2EHA/NVP=86/14 | CHMA | 20 PARTS BY WEIGHT | GSH |
| COMPARATIVE EXAMPLE 3 | 2EHA/NVP=86/14 | IBXA | 20 PARTS BY WEIGHT | GSH |
| COMPARATIVE EXAMPLE 4 | 2EHA/AA=94/6 | - | - | - |
| COMPARATIVE EXAMPLE 5 | 2EHA/AA=94/6 | CHMA | 20 PARTS BY WEIGHT | GSH |

The abbreviations in Table 2 represent the following compounds.

2EHA: 2-Ethylhexyl Acrylate
NVP: N-vinyl-2-pyrrolidone
AA: Acrylic Acid
DCPMA: Dicyclopentanyl Methacrylate
DCPMA Low: Dicyclopentanyl Methacrylate having a polymerization degree lower than that of DCPMA (Examples 1 and 2)
IBXA: Isobornyl Acrylate
CHMA: Cyclohexyl Methacrylate
ADMA: 1-Adamantyl Methacrylate
MMA: Methyl Methacrylate
GSH Acid: Thioglycolic Acid
GSH: 2-Mercaptoethanol

(Preparation of (Meth)Acrylic Polymer 1 (DCPMA) as (B) Component)

One hundred parts by weight of toluene, 100 parts by weight of dicyclopentanyl methacrylate (DCPMA) (product name: FA-513M, made by Hitachi Chemical Co., Ltd.), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 1 to be obtained. The glass transition temperature of the obtained (meth) acrylic polymer 1 was 175°C and the weight average molecular weight thereof was 4600.

(Preparation of (Meth)Acrylic Polymer 2 (DCPMA) as (B) Component)

One hundred parts by weight of toluene, 100 parts by weight of dicyclopentanyl methacrylate (DCPMA) (product name: FA-513M, made by Hitachi Chemical Co., Ltd.), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 2 to be obtained. The glass transition temperature of the obtained (meth) acrylic polymer 2 was 175°C and the weight average molecular weight thereof was 3600.

(Preparation of (Meth)Acrylic Polymer 3 (DCPMA Low) as (B) Component)

One hundred parts by weight of toluene, 100 parts by weight of dicyclopentanyl methacrylate (DCPMA) (product name: FA-513M, made by Hitachi Chemical Co., Ltd.), and 5 parts by weight of thioglycolic acid (GSH acid), as a chain transfer agent, were placed into a 4-neck flask. After they were stirred under a nitrogen atmosphere at 75°C for 1 hour, 0.2 parts by weight of azobisisobutyronitrile were placed therein as a thermal polymerization initiator to react with them at 75°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 3 to be obtained. The glass transition temperature of the obtained (meth) acrylic polymer 3 was 175°C and the weight average molecular weight thereof was 3000.

(Preparation of (Meth)Acrylic Polymer 4 (CHMA))

One hundred parts by weight of toluene, 100 parts by weight of cyclohexyl methacrylate (CHMA), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 4 to be obtained. The glass transition temperature of the obtained (meth) acrylic polymer 4 was 66°C and the weight average molecular weight thereof was 3700.

(Preparation of (Meth)Acrylic Polymer 5 (IBXA))

One hundred parts by weight of toluene, 100 parts by weight of isobornyl acrylate (IBXA), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 5 to be obtained. The glass transition temperature of the obtained (meth) acrylic polymer 5 was 97°C and the weight average molecular weight thereof was 3300.

(Preparation of (Meth)Acrylic Polymer 6 (ADMA) as (B) Component)

One hundred parts by weight of toluene, 100 parts by weight of 1-adamantyl methacrylate (ADMA), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 6 to be obtained. The glass transition temperature of the obtained (meth) acrylic polymer 6 was 250°C and the weight average molecular weight thereof was 4100.

(Preparation of (Meth)Acrylic Polymer 7 (ADMA/MMA40) as (B) Component)

One hundred parts by weight of toluene, 60 parts by weight of 1-adamantyl methacrylate (ADMA), 40 parts by

weight of methyl methacrylate (MMA), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth) acrylic polymer 7 to be obtained. The glass transition temperature of the obtained (meth)acrylic polymer 7 was 180°C and the weight average molecular weight thereof was 7100.

(Preparation of Acrylic Polymer Syrup 1 (2EHA/NVP = 86/14) as (A) Component)

Eighty six parts by weight of 2-ethylhexyl acrylate (2EHA), 14 parts by weight of N-vinyl-2-pyrrolidone (NVP), 0.05 parts by weight of a photo-polymerizatyion initiator (product name: IRGACURE 184, made by Ciba Speciality Chemicals Inc.), and 0.05 parts by weight of a photo-polymerization initiator (product name: IRGACURE 651, made by Ciba Speciality Chemicals Inc.) were placed into a 4-neck flask. A partial polymer (acrylic polymer syrup 1) having a rate of polymerization of approximately 11% by weight was obtained by exposing the mixture to UV rays under a nitrogen atmosphere such that the mixture was partially photopolymerized.

(Preparation of Acrylic Polymer Syrup 2 (2EHA/AA = 94/6) as (A) Component)

Ninety four parts by weight of 2-ethylhexyl acrylate (2EHA), 6 parts by weight of acrylic acid (AA), 0.05 parts by weight of a photo-polymerization initiator (product name: IRGACURE 184, made by Ciba Speciality Chemicals Inc.), and 0. 05 parts by weight of a photo-polymerization initiator (product name: IRGACURE 651, made by Ciba Speciality Chemicals Inc.) were placed into a 4-neck flask. A partial polymer (acrylic polymer syrup 2) having a rate of polymerization of approximately 8% by weight was obtained by exposing the mixture to UV rays under a nitrogen atmosphere such that the mixture was partially photopolymerized.

(Example 1)

(Preparation of Acrylic Pressure-Sensitive Adhesive Composition)

After 20 parts by weight of the aforementioned (meth)acrylic polymer 1 and 0.085 parts by weight of trimethylolpropane triacrylate were added to 100 parts by weight of the aforementioned acrylic polymer syrup 1, they were uniformly mixed together such that an acrylic pressure-sensitive adhesive composition was prepared.

(Production of Pressure-Sensitive Adhesive Layer Sheet)

A coated layer having a final thickness of 50 μm was formed by coating the aforementioned acrylic pressure-sensitive adhesive composition on one of the surfaces of a polyester film having a thickness of 38 μm (product name: MRF, made by Mitsubishi Chemical Polyester Co. , Ltd.), the one of the surfaces having been subjected to a release treatment with silicone. Subsequently, the surface of the coated acrylic pressure-sensitive adhesive composition was covered with one of the surfaces of a polyester film having a thickness of 38 μm (product name: MRN, made by Mitsubishi Chemical Polyester Co. , Ltd.), the one of the surfaces having been subjected to a release treatment with silicone, so that the one of the surfaces of the film was located near to the coated layer. Thereby, oxygen was blocked from the coated layer of the acrylic pressure-sensitive adhesive composition (pressure-sensitive adhesive layer). The pressure-sensitive adhesive layer sheet thus obtained was irradiated, for 360 seconds, with UV rays with an illumination intensity of 5 $mW/cm^2$ (measured by TOPCON UVR-T1 having a maximum sensitivity at 350 nm), the UV rays being created by using a black light lamp (made by TOSHIBA CORPORATION). The gel fraction of the pressure-sensitive adhesive layer made of the acrylic pressure-sensitive adhesive composition thus obtained was 61.5% by weight. The polyester film covering each of the surfaces of the pressure-sensitive adhesive layer functions as a release liner.

(Example 2)

An acrylic pressure-sensitive adhesive composition and a pressure-sensitive adhesive layer sheet were obtained in the same way as in Example 1, except that 20 parts by weight of the aforementioned (meth)acrylic polymer 2 and 0.085 parts by weight of trimethylolpropane triacrylate were added to 100 parts by weight of the aforementioned acrylic polymer syrup 1. The gel fraction of the obtained pressure-sensitive adhesive layer was 67.7% by weight.

(Example 3)

An acrylic pressure-sensitive adhesive composition and a pressure-sensitive adhesive layer sheet were obtained in the same way as in Example 1, except that 20 parts by weight of the aforementioned (meth)acrylic polymer 3 and 0.18 parts by weight of trimethylolpropane triacrylate were added to 100 parts by weight of the aforementioned acrylic polymer syrup 2. The gel fraction of the obtained pressure-sensitive adhesive layer was 62.1% by weight.

(Example 4)

An acrylic pressure-sensitive adhesive composition and a pressure-sensitive adhesive layer sheet were obtained in the same way as in Example 1, except that 10 parts by weight of the aforementioned (meth)acrylic polymer 6 and 0.1 parts by weight of trimethylolpropane triacrylate were added to 100 parts by weight of the aforementioned acrylic polymer syrup 1. The gel fraction of the obtained pressure-sensitive adhesive layer was 79.3% by weight.

(Example 5)

An acrylic pressure-sensitive adhesive composition and a pressure-sensitive adhesive layer sheet were obtained in the same way as in Example 1, except that 20 parts by weight of the aforementioned (meth) acrylic polymer 6 and 0.12 parts by weight of trimethylolpropane triacrylate were added to 100 parts by weight of the aforementioned acrylic polymer syrup 1. The gel fraction of the obtained pressure-sensitive adhesive layer was 74.7% by weight.

(Example 6)

An acrylic pressure-sensitive adhesive composition and a pressure-sensitive adhesive layer sheet were obtained in the same way as in Example 1, except that 20 parts by weight of the aforementioned (meth)acrylic polymer 7 and 0.1 parts by weight of trimethylolpropane triacrylate were added to 100 parts by weight of the aforementioned acrylic polymer syrup 1. The gel fraction of the obtained pressure-sensitive adhesive layer was 72.2% by weight.

(Comparative Example 1)

An acrylic pressure-sensitive adhesive composition and a pressure-sensitive adhesive layer sheet were obtained in the same way as in Example 1, except that 0.045 parts by weight of 1,6-hexanediol diacrylate were added to 100 parts by weight of the aforementioned acrylic polymer syrup 1. The gel fraction of the obtained pressure-sensitive adhesive layer was 77.4% by weight.

(Comparative Example 2)

An acrylic pressure-sensitive adhesive composition and a pressure-sensitive adhesive layer sheet were obtained in the same way as in Example 1, except that 20 parts by weight of the aforementioned (meth) acrylic polymer 4 and 0.14 parts by weight of 1,6-hexanediol diacrylate were added to 100 parts by weight of the aforementioned acrylic polymer syrup 1. The gel fraction of the obtained pressure-sensitive adhesive layer was 74.9% by weight.

(Comparative Example 3)

An acrylic pressure-sensitive adhesive composition and a pressure-sensitive adhesive layer sheet were obtained in the same way as in Example 1, except that 20 parts by weight of the aforementioned (meth)acrylic polymer 5 and 0.1 parts by weight of trimethylolpropane triacrylate were added to 100 parts by weight of the aforementioned acrylic polymer syrup 1. The gel fraction of the obtained pressure-sensitive adhesive layer was 71.9% by weight.

(Comparative Example 4)

An acrylic pressure-sensitive adhesive composition and a pressure-sensitive adhesive layer sheet were obtained in the same way as in Example 1, except that 0.07 parts by weight of 1,6-hexanediol diacrylate were added to 100 parts by weight of the aforementioned acrylic polymer syrup 2. The gel fraction of the obtained pressure-sensitive adhesive layer was 75.2% by weight.

(Comparative Example 5)

An acrylic pressure-sensitive adhesive composition and a pressure-sensitive adhesive layer sheet were obtained in the same way as in Example 1, except that 20 parts by weight of the aforementioned (meth)acrylic polymer 4 and 0.11 parts by weight of 1,6-hexanediol diacrylate were added to 100 parts by weight of the aforementioned acrylic polymer syrup 2. The gel fraction of the obtained pressure-sensitive adhesive layer was 67.7% by weight.

(Test Method)

[180° Peeling-Off Pressure-Sensitive Adhesive Force Test]

After one of the release liners (polyester films) on the pressure-sensitive adhesive layer sheet according to each of Examples and Comparative Examples was peeled off, a polyethylene terephthalate film having a thickness of 50 μm was attached. The obtained sheet was cut into a piece having a width of 25 mm, which was used as a test specimen. In addition, a polypropylene plate (part number: 1600, made by Takiron Co. , Ltd.) and an acrylic plate (ACRYLITE, made by Mitsubishi Rayon Co., Ltd.), which had been cleaned with isopropyl alcohol and had a thickness of 2 mm, were prepared. After the release liner on the other surface of the pressure-sensitive adhesive layer sheet was peeled off, the pressure-sensitive adhesive surface of the sheet was attached to the polypropylene plate or acrylic plate by reciprocating a 2-kg roller.

After the pressure-sensitive adhesive layer sheet was attached to the polypropylene plate or the acrylic plate, the sheet was left uncontrolled under a 40°C-environment for 48 hours and then under a 23°C-environment for 30 minutes. The pressure-sensitive adhesive force (resistance force) (unit: N/25 mm) of the pressure-sensitive adhesive layer sheet to an adherend was measured by peeling off the other end of the sheet in the 180° peeling-off direction at a speed of 300 mm/min. The case where the pressure-sensitive adhesive force to the polypropylene plate or the acrylic plate was larger than or equal to 16 N/25 mm was evaluated as good (°), while the case where the pressure-sensitive adhesive force thereto was less than 16 N/25 mm was evaluated as bad (×). Results of the measurement are shown in Table 3.

[Resistance to Resilience Test]

The pressure-sensitive adhesive layer sheet according to each of Examples and Comparative Examples was cut into a piece having a width of 10 mm and a length of 90 mm, and the piece was attached to a clean aluminum plate having a thickness of 0.5 mm, a width of 10 mm, and a length of 90 mm, which was used as a test specimen. Subsequently, the test specimen was curved so as to have a curvature of R = 150 mm by making the test specimen near to the aluminum plate follow a cylinder. Thereafter, the release liner (polyester film) on the other side of the pressure-sensitive adhesive layer sheet was peeled off, and then the test specimen was laminated onto the aforementioned polypropylene plate. After the test specimen, in the state of being laminated onto the polypropylene plate, was left uncontrolled at room temperature (25°C) for 7 hours, the distance created by pop-off of the pressure-sensitive adhesive layer sheet, i.e., the distance between the surface of the polypropylene plate and the pressure-sensitive adhesive layer (average of the heights at both ends) (unit: mm) was measured. The case where the distance of the pop-off was smaller than or equal to 4 mm was evaluated as good (°), while the case where the distance thereof was larger than 4 mm was evaluated as bad (×). Results of the measurement are shown in Table 3. Herein, the values shown in Table 3 are average values with respect to arbitrary multiple points.

[Holding Property Test]

After one of the release liners (polyester films) on the pressure-sensitive adhesive layer sheet according to each of Examples and Comparative Examples was peeled off, a polyethylene terephthalate film having a thickness of 50 μm was attached. The obtained sheet was cut into a piece having a width of 10 mm, which was used as a test specimen. The pressure-sensitive adhesive surface of the test specimen having the area of 10 mm in width × 20 mm in length was attached to a bakelite plate that had been cleaned with toluene, and the test specimen was left uncontrolled under a 60°C-environment for 30 minutes. Thereafter, a weight was hung from one end of the specimen such that a 500-g load was applied in the shear direction, and the specimen, in the state of the weight being hung, was left uncontrolled under a 60°C-environment for 2 hours, thereafter allowing a holding property to be evaluated. The case where the test specimen had not dropped was evaluated as good (°), while the case where the test specimen had dropped was evaluated as bad (×). Similarly, a holding property was evaluated also with respect to a temperature condition of 80°C. Results of the measurement are shown in Table 3.

[Table 3]

| | PEELING-OFF PRESSURE-SENSITIVE ADHESIVE FORCE TEST (PRESSURE-SENSITIVE ADHESIVE FORCE [N/25 mm]) | | RESISTANCE TO RESILIENCE TEST | HOLDING PR (SHIFT DIS OPERTY TEST TANCE [mm]) | |
|---|---|---|---|---|---|
| | POLYPROPYLENE PLATE | ACRYLIC PLATE | POP-OFF DISTANCE [mm] | 60°C | 80°C |
| EXAMPLE 1 | 19.6(○) | 29.1(○) | 0.0(○) | ○ | ○ |
| EXAMPLE 2 | 18.0(○) | 25.8(○) | 0.0(○) | ○ | ○ |
| EXAMPLE 3 | 16.4(○) | 24.1(○) | 1.6(○) | ○ | ○ |
| EXAMPLE 4 | 18.6(○) | 21.4(○) | 0.0(○) | ○ | ○ |
| EXAMPLE 5 | 20.0(○) | 24.5(○) | 0.0(○) | ○ | ○ |
| EXAMPLE 6 | 16.4(○) | 22.1(○) | 0.5(○) | ○ | ○ |
| COMPARATIVE EXAMPLE 1 | 12.4(×) | 15.6(×) | 14.0(×) | ○ | × |
| COMPARATIVE EXAMPLE 2 | 16.1(○) | 24.4(○) | 1.1(○) | ○ | × |
| COMPARATIVE EXAMPLE 3 | 16.7(○) | 20.4(○) | 1.9(○) | ○ | × |
| COMPARATIVE EXAMPLE 4 | 11.7(×) | 20.1(○) | 9.0(×) | ○ | × |
| COMPARATIVE EXAMPLE 5 | 13.8(×) | 33.7(○) | 0.9(○) | ○ | × |

As shown in Table 3, it was confirmed that the adhesiveness in each of Examples was more improved in comparison with those in Comparative Examples 1 to 5. Specifically, it was confirmed that both the pressure-sensitive adhesive force to the polypropylene plate and acrylic plate and the resistance to resilience in each of Examples were more improved, in comparison with those in Comparative Example 1 in which the (meth) acrylic polymer (B) was not contained. Further, it was confirmed that both the pressure-sensitive adhesive force to the polypropylene plate and the resistance to resilience in each of Examples were more improved, in comparison with those in Comparative Example 4 in which the (meth) acrylic polymer (B) was not contained similarly. Furthermore, it was confirmed that both the pressure-sensitive adhesive force to the polypropylene plate and acrylic plate and the resistance to resilience in Examples 1, 2, 4, and 5, were more improved, in comparison with those in each of Comparative Examples. Furthermore, it was confirmed that the holding property (cohesive force) at 80°C in each of Examples was more improved, in comparison with those in Comparative Examples 1 to 5. Furthermore, it was confirmed that a good holding property at 60°C was maintained in each of Examples. Accordingly, it was confirmed that excellent pressure-sensitive adhesive force, excellent resistance to resilience, and an excellent holding property were combined in each of Examples 1 to 6.

Industrial Applicability

The present invention can be used in an acrylic pressure-sensitive adhesive composition and an acrylic pressure-sensitive adhesive tape.

**Claims**

**1.** An acrylic pressure-sensitive adhesive composition comprising:

an acrylic polymer (A); and
a (meth) acrylic polymer (B) that includes, as a monomer unit, a (meth) acrylic monomer having a tricyclic or higher alicyclic structure and that has a weight average molecular weight of 1000 or more and less than 30000.

**2.** The acrylic pressure-sensitive adhesive composition according to claim 1, wherein the (meth) acrylic monomer is a (meth)acrylic acid ester represented by the following general formula (1):

$$CH_2=C(R^1)COOR^2 \qquad (1)$$

[wherein, $R^1$ is a hydrogen atom or methyl group and $R^2$ is an alicyclic hydrocarbon group having a tricyclic or higher alicyclic structure].

**3.** The acrylic pressure-sensitive adhesive composition according to claim 2, wherein the alicyclic hydrocarbon group has a bridged ring structure.

**4.** The acrylic pressure-sensitive adhesive composition according to any one of claims 1 to 3, wherein the content of the (meth)acrylic polymer (B) is within a range of 2 to 70 parts by weight based on 100 parts by weight of the acrylic polymer (A).

**5.** An acrylic pressure-sensitive adhesive tape having a pressure-sensitive adhesive layer containing the acrylic pressure-sensitive adhesive composition according to any of claims 1 to 4.

## Patentansprüche

**1.** Acrylhaftklebstoffzusammensetzung umfassend:

ein Acrylpolymer (A); und
ein (Meth)acrylpolymer (B), welches, als eine Monomereinheit, ein (Meth)acrylmonomer mit einer tricyclischen oder höheren alicyclischen Struktur einschließt und welches ein Gewichtsmittel des Molekulargewichts von 1000 oder mehr und weniger als 30000 aufweist.

**2.** Acrylhaftklebstoffzusammensetzung gemäß Anspruch 1, wobei das (Meth)acrylmonomer ein (Meth)acrylsäureester ist, der durch die folgende allgemeine Formel (1) wiedergegeben ist:

$$CH_2=C(R^1)COOR^2 \qquad (1)$$

wobei $R^1$ ein Wasserstoffatom oder eine Methylgruppe ist und $R^2$ eine alicyclische Kohlenwasserstoffgruppe mit einer tricyclischen oder höheren alicyclischen Struktur ist.

**3.** Acrylhaftklebstoffzusammensetzung gemäß Anspruch 2, wobei die alicyclische Kohlenwasserstoffgruppe eine verbrückte Ringstruktur aufweist.

**4.** Acrylhaftklebstoffzusammensetzung gemäß einem der Ansprüche 1 bis 3, wobei der Gehalt des (Meth)acrylpolymers (B) in einem Bereich von 2 bis 70 Gewichtsteilen, bezogen auf 100 Gewichtsteile des Acrylpolymers (A), liegt.

**5.** Acrylhaftklebeband mit einer Haftklebstoffschicht, die die Acrylhaftklebstoffzusammensetzung gemäß einem der Ansprüche 1 bis 4 enthält.

## Revendications

**1.** Composition d'adhésif acrylique sensible à la pression comprenant :

un polymère acrylique (A) ; et
un polymère (méth)acrylique (B) qui inclut, en tant que motif monomère, un monomère (méth)acrylique ayant une structure tricyclique ou alicyclique supérieure et qui a une masse moléculaire moyenne en poids supérieure ou égale à 1 000 et inférieure à 30 000.

**2.** Composition d'adhésif acrylique sensible à la pression selon la revendication 1, dans laquelle le monomère (méth)acrylique est un ester d'acide (méth)acrylique représenté par la formule générale (1) suivante :

$$CH_2=C(R^1)COOR^2 \qquad (1)$$

[dans laquelle $R^1$ est un atome d'hydrogène ou un groupe méthyle et $R^2$ est un groupe hydrocarbure alicyclique ayant une structure tricyclique ou alicyclique supérieure].

**3.** Composition d'adhésif acrylique sensible à la pression selon la revendication 2, dans laquelle le groupe hydrocarbure alicyclique a une structure à cycles pontés.

**4.** Composition d'adhésif acrylique sensible à la pression selon l'une quelconque des revendications 1 à 3, dans laquelle la teneur en polymère (méth)acrylique (B) est à l'intérieur d'une fourchette de 2 à 70 parties en poids sur la base de 100 parties en poids du polymère acrylique (A).

**5.** Ruban adhésif acrylique sensible à la pression ayant une couche d'adhésif sensible à la pression contenant la composition d'adhésif acrylique sensible à la pression selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6207151 A
- JP 1999504054 W
- JP 58118872 B